# FASCICULE DE BREVET EUROPEEN

(11) **EP 3 326 294 B1**
(45) Date de publication et mention de la délivrance du brevet: **14.10.2020**
(21) Numéro de dépôt: 16740983.8
(22) Date de dépôt: 08.07.2016
(51) Int. Cl.: H04B 3/54

(54) **PROCEDE DE DETERMINATION D'UNE ROUTE DANS UN RESEAU CPL**
VERFAHREN ZUR FESTLEGUNG EINER ROUTER IN EINEM PLC-NETZWERK
METHOD FOR DETERMINING A ROUTE IN A PLC NETWORK

(30) Priorité: 24.07.2015 FR 1557068
(43) Date de publication de la demande: 30.05.2018
(73) Titulaire: Sagemcom Energy & Telecom SAS, 92500 Rueil-Malmaison (FR)
(72) Inventeur: TEBOULLE, Henri, 92500 Rueil Malmaison (FR); ROTER, Ziv, 92500 Rueil Malmaison (FR); ADAM, Sylvestre, 92500 Rueil Malmaison (FR)
(74) Mandataire: Cabinet Le Guen Maillet
(86) Numéro de dépôt international: PCT/EP2016/066341
(87) Numéro de publication internationale: WO 2017/016854

(56) Documents cités:
- "ITU-T Narrowband orthogonal frequency division multiplexing power line communication transceivers for G3-PLC networks G.9903", SERIES G: TRANSMISSION SYSTEMS AND MEDIA, DIGITAL SYSTEMS AND NETWORKS: Access networks - In premises networks, 1 février 2014 (2014-02-01), pages 1-226, XP055257033, Extrait de l'Internet: URL:https://www.itu.int/rec/dologin_pub.as p?lang=e&id=T-REC-G.9903-201402-I!!PDF-E&t ype=items [extrait le 2016-03-10]

## Description

La présente invention concerne un procédé de détermination, par un routeur, d'une route entre lui et un autre routeur d'un réseau de communication par courants porteurs en ligne ainsi qu'un tel routeur pourvu de moyens pour déterminer une route entre lui et un autre routeur dudit réseau.

La présente invention trouve application dans un réseau de communication maillé dont chaque nœud est constitué d'un routeur pouvant transmettre des données à au moins un autre routeur en utilisant pour ce faire une route. Dans le cas de la présente invention, un tel réseau de communication utilise, en tant que vecteurs physiques, des lignes d'un réseau de distribution électrique en superposant aux courants de distribution électrique des courants porteurs de données à transmettre d'un routeur à un autre. La technologie utilisée est dite CPL (Courants Porteurs en Ligne). Un tel réseau de communication maillé est par exemple décrit dans le standard dit G3-PLC Alliance, notamment celui d'avril 2015.

L'application principale est par exemple la transmission de données entre un compteur électrique donné lié à un routeur donné et un concentrateur de données lié à un autre routeur du réseau. Cette transmission de données est assurée par un certain nombre de routeurs du réseau de communication qui forment entre eux une route entre le fournisseur des données (par exemple, un compteur électrique) et le collecteur desdites données (par exemple, un concentrateur de données). La transmission en chaque segment de route entre deux routeurs voisins peut être fortement perturbée, voire interrompue, si bien que, dans ce type de réseau de communication par courants porteurs en ligne, il est nécessaire de prévoir un protocole de routage efficace permettant de déterminer dès que le besoin s'en fait ressentir une nouvelle route entre deux routeurs communiquant entre eux.

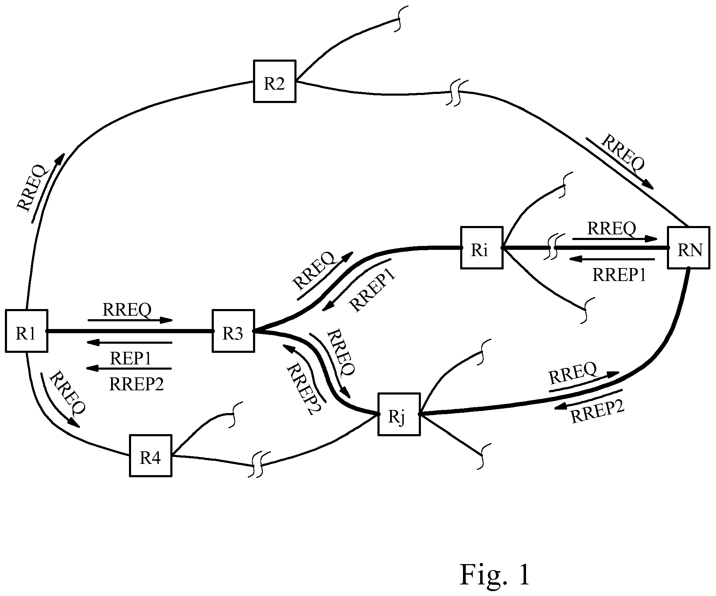

Le standard G3-PLC Alliance mentionné ci-dessus préconise l'utilisation d'un protocole de routage qui est appelé LOADng (Lightweight On-demand Ad hoc Distance-vector Routing Protocol - Next Génération). On rappelle le principe d'un tel protocole de routage, en relation avec la Fig. 1.

Cette Fig. 1 montre un réseau de communication maillé comportant d'un ensemble de nœuds constitués de routeurs R1 à RN. Par exemple, certains routeurs sont liés à des compteurs électriques alors que les autres routeurs sont liés à des concentrateurs de données. L'objet de ce réseau de communication est l'échange de données entre compteurs électriques et concentrateurs de données.

Lorsqu'un routeur, dit routeur initiateur, tel que le routeur R1 de la Fig. 1, a besoin d'une route vers un routeur destinataire, tel que le routeur RN, parce qu'il a à lui délivrer un paquet de données et que, pour lui, cette route n'existe pas déjà, il diffuse (broadcast en anglais) un message de requête de route RREQ codant le routeur destinataire RN. Ce dernier reçoit donc à des temps différents plusieurs messages de requête de route RREQ ayant respectivement transités par des routes différentes, certaines plus longues que d'autres (les nombres de sauts (hop en anglais) d'un routeur à un autre sont différents) et certaines de meilleure qualité que les autres. Par exemple, à la Fig. 1, il reçoit un message RREQ qui a transité par le routeur R2, un autre par les routeurs R3 et Ri, un autre par les routeurs R3 et Rj et un autre par les routeurs R4 et Rj.

Supposons, à titre d'exemple illustratif, qu'à un instant t1, il n'ait reçu que le message RREQ ayant transité par le routeur R2 ainsi que celui ayant transité par les routeurs R3 et Ri. Compte tenu d'une métrique prédéterminée, par exemple le nombre de sauts (hop) de chacune des routes parcourues par ces messages, il peut décider de choisir la route transitant par les routeurs R3 et Ri. Il émet alors en point à point (unicast en anglais) à destination du routeur initiateur R1, un message de réponse RREP1. La route suivie par ce message RREP1 est en trait fort à la Fig. 1.

Supposons encore qu'à un temps t2, il ait reçu l'ensemble des messages de requête RREQ représente à la Fig.1 et, notamment, celui qui a transité par les routeurs R3 et Rj. Il peut considérer que, toujours compte tenu de la métrique à appliquer, cette dernière route est encore meilleure que la route qu'il avait précédemment choisie (celle transitant par les routeurs R3 et Ri) si bien qu'il choisit maintenant la route transitant par les routeurs R3 et Rj. Il émet alors en point à point (unicast en anglais) à destination du routeur initiateur R1, un message de réponse RREP2. La route suivie par ce message RREP2 est également en trait fort à la Fig. 1. L'émission d'un nouveau message de réponse RREP2 peut également être consécutif à la réception d'un nouveau message de requête RREQ diffusé par le même routeur initiateur R1 alors qu'il n'avait pas encore reçu de réponse à son premier message de requête RREQ.

Dans cet exemple, le routeur initiateur R1 reçoit à un temps t'1 le message de réponse RREP1 et établit la route suivie par ce message RREP1 comme étant la route vers le routeur destinataire RN. Au t'2, il reçoit le message de réponse RREP2 et établit alors la route suivie par ce message RREP2 comme étant la route vers le routeur destinataire RN.

Néanmoins, il peut arriver que le routeur initiateur R1 reçoive le message de réponse RREP2 avant le message de réponse RREP1. Ainsi, au temps t"1, il reçoit le message de réponse RREP2 et établit la route suivie par ce message RREP2 comme étant la route vers le routeur destinataire RN. Au temps t"2, il reçoit le message de réponse RREP1 mais s'aperçoit que ce message RREP1 a été émis à un temps tl antérieur au temps t2 d'émission du message RREP2. Il favorise le message de réponse qui a été émis le plus récemment et ne modifie donc pas la route qu'il a établie avec le routeur destinataire RN.

Pour que le routeur initiateur R1 puisse contrôler que tel message de réponse est plus récent que celui qu'il a pris en compte pour établir la route vers le routeur destinataire RN, le routeur destinataire RN dispose d'un compteur qu'il incrémente à chaque message de réponse qu'il émet, quel qu'en soit d'ailleurs son destinataire. Au moment de l'émission d'un message de réponse, il inclut la valeur du compte prise à ce moment dans le message de réponse en tant que numéro de séquence. Dans l'exemple donné ci-dessus, le message de réponse RREP1 porte un numéro de séquence S1 correspondant à la valeur du compte du routeur destinataire RN au moment tl d'émission dudit message de réponse RREP1. De même, le message de réponse RREP2 porte un numéro de séquence S2 correspondant à la valeur du compte du routeur destinataire RN au moment t2 d'émission dudit message de réponse RREP2. Par comparaison des numéros de séquence S1 et S2, le routeur initiateur R1 peut déterminer quel message de réponse, RREP1 ou RREP2, est le plus récent.

La valeur du compte prise par le compteur du routeur destinataire est un chiffre binaire à n bits, par exemple 16 bits. Il arrive assez souvent que lors d'une incrémentation, cette valeur passe de la valeur maximale 2ⁿ à 0 si bien, sans mécanisme spécial, l'ordre des messages de réponse est perturbé. Dans l'exemple donné ci-dessus, la valeur S1 pourrait être, par exemple, de 52122 et la valeur S2 pourrait être 10 car la valeur de compte est passée par 0 entre temps.

Deux mécanismes sont généralement prévus pour résoudre le problème soulevé ci-dessus. L'un est une réinitialisation des routes déjà établies et l'autre est un mécanisme dit "rollover", recommandé par le standard G3 PLC, qui établit la règle suivante pour la comparaison effectuée par le routeur initiateur R1. Un numéro de séquence S1 est plus grand qu'un autre numéro de séquence S2 si :
- S2 < S1 et S1 - S2 est inférieure ou égale à 2ⁿ⁻¹, ou
- S1 < S2 et S2 - S1 est supérieure à 2ⁿ⁻¹.

De manière générale, l'ensemble de ces processus donne entière satisfaction. Néanmoins, un problème peut survenir lorsque le routeur destinataire RN se réinitialise, suite par exemple à un dysfonctionnement particulier engendré, par exemple, par une interruption de son alimentation électrique. Il en résulte que son compteur est réinitialisé à zéro. Si peu de temps après, il reçoit du routeur initiateur R1 un message de requête RREQ auquel il répond par l'émission d'un message de réponse RREP, ce dernier peut porter un numéro de séquence incohérent pour le routeur initiateur R1. Supposons que dans l'exemple donné ci-dessus, entre l'émission du message de réponse RREP1 et l'émission du message de réponse RREP2, une coupure du courant soit intervenue au niveau du routeur destinataire RN. Supposons encore que le message de réponse RREP1 porte le numéro de séquence 12583. On comprendra que le numéro de séquence du message de réponse RREP2 peut être inférieur à cette valeur, par exemple 10. Dans ce cas, le message de réponse RREP2 est rejeté alors qu'en réalité, c'est quand même lui le plus récent. Par ailleurs, il est possible que la route établie au moyen du message de réponse RREP1 (sur la Fig. 1, celle traversant les routeurs R3 et Ri) soit devenue impraticable. Le routeur initiateur R1 diffuse alors un nouveau message de requête RREQ auquel le routeur destinataire répond par un message de réponse RREP qui sera en définitive aussi rejeté par le routeur initiateur R1 car incohérent. Cette situation peut perdurer pendant toute la période de validité de la route établie, typiquement de l'ordre de 24 heures.

Il résulte de cette situation que, du fait de tentatives de communications infructueuses, la charge du réseau peut devenir très importante entraînant des risques de collision également importants, ceci d'autant plus le type de réseau de communications envisagé ici est souvent à bas débits et à taux de trames de signalisation important.

On notera également que les processus décrits précédemment obligent à mémoriser la valeur la plus récente de numéro de séquence dans le routeur initiateur R1, notamment dans des mémoires de type FLASH pour prévoir des cas de coupure de courant au niveau de ce routeur, ce qui en définitive peut s'avérer laborieux.

Le but de la présente invention est de prévoir un procédé de détermination de la route entre un routeur initiateur et un routeur destinataire d'un réseau de communication par courants porteurs en ligne qui permette de résoudre les problèmes évoqués ci-dessus.

De manière générale, l'invention trouve application dans un réseau dans lequel un tel procédé de détermination comprend les étapes suivantes :
- une étape de diffusion dans ledit réseau par ledit routeur initiateur d'au moins un message de requête de route, ledit routeur destinataire répondant audit ou à chaque message de requête de route par la transmission point à point au routeur initiateur d'au moins un message de réponse identifiant une route entre ledit routeur initiateur et ledit routeur destinataire, et
- une étape de réception d'un message de réponse de route suite à un message de requête, ledit message de réponse étant dit message de réponse courante.

Pour résoudre le problème mentionné ci-dessus, ce procédé est caractérisé en ce qu'il comporte en outre
- une étape d'attache d'un délai à un message de réponse suite à une requête pour une route vers ledit routeur destinataire mise en œuvre à la réception d'une réponse, et
- une étape de vérification qu'à la réception d'un message de réponse courante, le délai attaché à un message de réponse suite à un message de requête pour une route vers ledit routeur destinataire antérieurement reçu n'est pas expiré,
- une étape de retenue en tant que route entre ledit routeur initiateur et ledit routeur destinataire de la route identifiée par le message de réponse le plus récemment transmis par ledit routeur destinataire si le délai attaché audit message de réponse précédemment reçu n'est pas expiré, et
- une étape de retenue de la route identifiée par le message de réponse courante même si un message de réponse suite à un message de requête pour une route vers ledit routeur destinataire a été précédemment reçu dès lors que le délai attaché audit message de réponse précédemment reçu est expiré.

On comprendra que si le délai attaché à un message de réponse suite à un message de requête pour une route vers ledit routeur destinataire antérieurement reçu est expiré, la route identifiée par le message de réponse courante est retenue quels que soient les événements intervenus au niveau du routeur destinataire dont le résultat serait une réinitialisation dudit routeur, notamment une coupure d'alimentation de ce routeur.

La présente invention trouve application dans un routeur d'un réseau de communication par courants porteurs en ligne, ledit routeur comportant une unité de détermination d'une route entre lui et un routeur destinataire, ladite unité comportant:
- des moyens de diffusion pour diffuser dans ledit réseau au moins un message de requête de route, et
- des moyens de réception pour recevoir un message de réponse identifiant une route entre ledit routeur et ledit routeur destinataire.

Selon la présente invention, ce routeur comporte encore
- des moyens de temps pour attacher un délai à un message de réponse à une requête pour une route vers ledit routeur destinataire reçu par lesdits moyens de réception, et
- des moyens de vérification pour vérifier qu'à la réception d'un message de réponse par lesdits moyens de réception, le délai attaché par lesdits moyens de temps à un message de réponse suite à un message de requête pour une route vers ledit routeur destinataire antérieurement reçu n'est pas expiré,
- des moyens de retenue pour retenir en tant que route entre ledit routeur initiateur et ledit routeur destinataire, la route identifiée par le message de réponse le plus récemment transmis par ledit routeur destinataire si le délai attaché au message de réponse précédemment reçu n'est pas expiré, et
- des moyens de retenue pour retenir la route identifiée par le message de réponse courante même si un message de réponse suite à un message de requête pour une route vers ledit routeur destinataire a été précédemment reçu dès lors que le délai attaché audit message de réponse précédemment reçu est expiré.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un schéma représentant un réseau de communication par courants porteurs illustrant un procédé de déterminant d'une route entre un routeur initiateur et un routeur destinataire selon l'état de la technique,
La Fig. 2 est un diagramme illustrant un procédé de détermination d'une route entre un routeur initiateur et un routeur destinataire d'un réseau de communication selon la présente invention,
La Fig. 3 est un schéma illustrant un exemple de mise en œuvre d'un procédé de détermination de route selon la présente invention par un routeur dudit réseau de communication de la Fig. 1,
La Fig. 4 est un schéma synoptique d'un routeur comportant une unité de détermination de route entre deux routeurs selon la présente invention, et
La Fig. 5 est un schéma synoptique d'une unité de détermination de route selon un mode de réalisation particulier de la présente invention.

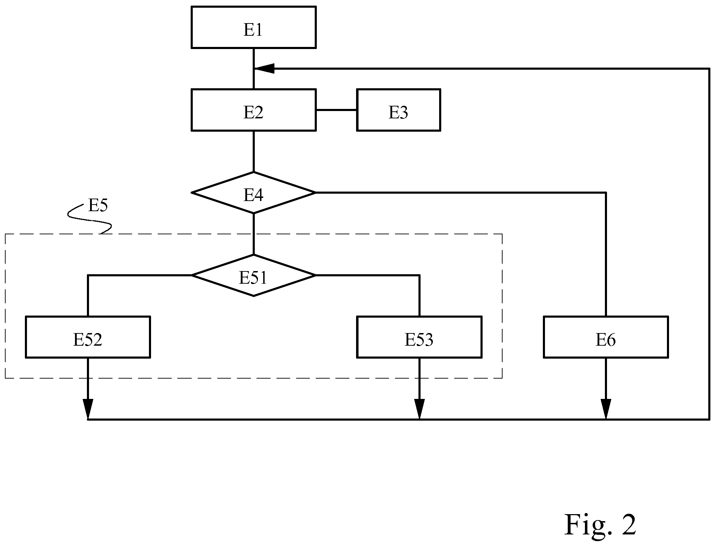

Un procédé de détermination d'une route selon la présente invention peut être mis en œuvre par tout routeur d'un réseau de communication par courants porteurs en ligne tel que celui qui est représenté à la Fig. 1. Lorsqu'un routeur, dit routeur initiateur tel que le routeur R1 de la Fig. 1, souhaite déterminer une route entre lui et un routeur destinataire, tel que le routeur RN de la Fig. 1, ce routeur initiateur R1 met en œuvre un procédé selon la présente invention dont un diagramme est représenté à la Fig. 2. Ce procédé comporte une étape de diffusion E1 dans ledit réseau de communication par ledit routeur initiateur R1 d'au moins un message de requête de route RREQ, ledit routeur destinataire RN répondant audit ou à chaque message de requête de route par la transmission point à point au routeur initiateur R1 d'au moins un message de réponse RREP identifiant une route entre ledit routeur initiateur R1 et ledit routeur destinataire RN.

Il comporte encore une étape E2 de réception d'un message de réponse RREP à un message de requête de route RREQ, ledit message de réponse étant dit par la suite, pour un instant présent, "message de réponse courante" RREPc.

Le procédé selon l'invention comporte encore une étape E3 d'attache d'un délai T0 au message de réponse courante RREPc qui vient d'être reçu par ledit routeur initiateur R1 suite à la diffusion d'un message de requête RREQ pour une route vers ledit routeur destinataire RN.

Il comporte encore une étape E4 de vérification qu'à la réception d'un message de réponse courante RREPc, le délai T0 attaché à une réponse antérieurement reçue RREP⁻ (si une telle réponse antérieure existe) suite à la diffusion d'une requête RREQ pour une route vers ledit routeur destinataire RN n'est pas expiré.

Si le délai T0 attaché à ladite réponse précédemment reçue RREP⁻ n'est pas expiré, est alors mise en œuvre une étape E5 de retenue, en tant que route entre ledit routeur initiateur R1 et ledit routeur destinataire RN, de la route qui est identifiée par le message de réponse RREPc ou RREP⁻ le plus récemment transmis par ledit routeur destinataire RN, et si, au contraire, le délai T0 attaché à ladite réponse RREP⁻ précédemment reçue est expiré, une étape E6 de retenue de la route identifiée par le message de réponse courante RREPc même si un message de réponse RREP⁻ à un message de requête RREQ pour une route vers ledit routeur destinataire RN a été précédemment reçue.

Dans un mode de réalisation particulier, l'étape E5 comprend une étape E51 de vérification que le message de réponse courante RREPc a été transmis par le routeur destinataire RN postérieurement à la réponse antérieurement reçue RREP⁻. Si tel est le cas, est mise en œuvre une étape E52 de retenue, en tant que route entre ledit routeur initiateur R1 et ledit routeur destinataire RN, de la route identifiée par le message de réponse courante RREPc et, dans le cas contraire, une étape E53 de retenue de la route identifiée par le message de réponse antérieurement reçue RREP⁻.

La présente invention trouve une application particulière à des réseaux de communication dans lesquels une route est identifiée par un numéro de séquence que porte chaque réponse de route RREP émise par un routeur destinataire. Un tel réseau est par exemple un réseau de communication conforme au standard G3-PLC déjà mentionné dans le préambule de la présente description. Pour ce faire, le routeur destinataire RN dispose d'un compteur qu'il incrémente à chaque message de réponse qu'il émet, quel qu'en soit d'ailleurs son destinataire. Au moment de l'émission d'un message de réponse RREP, il inclut la valeur du compte prise à ce moment dans le message de réponse en tant que numéro de séquence. Ainsi, non seulement la route correspondant à cette réponse est identifiée par ce numéro de séquence, mais le routeur initiateur R1 peut également contrôler, sur la base de ces numéros de séquence, si la réponse courante RREP a été émise par le routeur destinataire postérieurement ou antérieurement à une réponse reçue antérieurement par ledit routeur initiateur R1.

La durée du délai T0 est sensiblement de même grandeur que le temps maximum estimé mis par un message de requête RREQ pour transiter, dans ledit réseau de communication considéré, d'un routeur initiateur R1 à un routeur destinataire RN. Dans le standard G3-PLC mentionné ci-dessus, la durée du délai T0 est de l'ordre du temps nommé NET_TRAVERSAL_TIME qui est le temps maximum qu'un message RREQ est espéré mettre pour traverser d'un bout du réseau à l'autre bout.

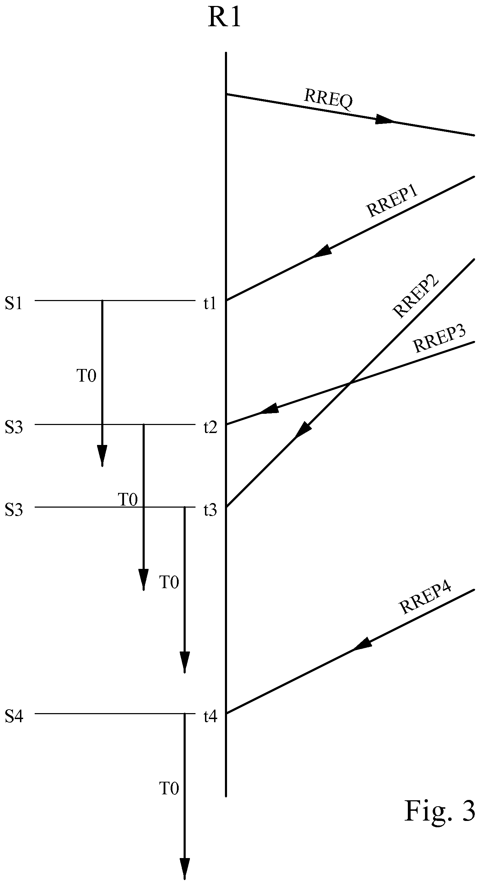

On décrit maintenant un exemple de mise en œuvre d'un procédé de détermination de la route entre un routeur initiateur et un routeur destinataire selon la présente invention, en relation avec la Fig. 3. Dans cette description, on ne considère que les étapes qui sont mises en œuvre par un seul routeur, à savoir le routeur initiateur R1.

L'étape E1 consiste donc à diffuser dans le réseau de communication considéré un message de requête de route RREQ à laquelle ledit routeur destinataire RN répond par la transmission point à point au routeur initiateur R1 d'au moins un message de réponse RREP identifiant une route entre ledit routeur initiateur R1 et ledit routeur destinataire RN. Au temps t1, un premier message de réponse RREP1 est reçu (étape E2) par le routeur initiateur R1. L'étape E3 est mise en œuvre par l'attache d'un délai T0 au message de réponse courante RREP1. L'étape E4 constate qu'aucun message de réponse n'a été antérieurement reçu et l'étape E5 est alors mise en œuvre. L'étape E51 constate également qu'aucun message de réponse n'a été antérieurement reçu et est alors mise en œuvre l'étape E52 de retenue, en tant que route entre ledit routeur initiateur R1 et ledit routeur destinataire RN, de la route identifiée par le message de réponse courante RREP1. Cette identification est par exemple donnée par le numéro de séquence S1 inclus dans le message de réponse courante RREP1.

Au temps t2, un second message de réponse RREP3 (il porte la référence 3 car il a été émis par le routeur RN postérieurement à un autre message de réponse RREP2) est reçu (nouvelle étape E2) par le routeur initiateur R1. L'étape E3 est mise en œuvre par l'attache d'un délai T0 au message de réponse courante RREP3. L'étape E4 constate qu'un message de réponse RREP1 a été antérieurement reçu et que le délai T0 attaché à ce message de réponse antérieure RREP1 n'est pas échu. En conséquence, l'étape E5 est alors mise en œuvre. L'étape E51 constate également qu'un message de réponse antérieure RREP1 a été reçu et qu'il a été transmis par le routeur destinataire RN à un temps postérieur à celui de transmission du message de réponse RREP1. En l'occurrence, le numéro de séquence S1 inclus dans le message de réponse RREP1 est inférieur au numéro de séquence S3 inclus dans le message de réponse courante RREP3. Est alors mise en œuvre l'étape E52 de retenue, en tant que route entre ledit routeur initiateur R1 et ledit routeur destinataire RN, de la route identifiée par le message de réponse courante RREP3. Cette identification est par exemple donnée par le numéro de séquence S3 inclus dans le message de réponse courante RREP3.

Au temps t3, un troisième message de réponse RREP2 est reçu (nouvelle étape E2) par le routeur initiateur R1. L'étape E3 est mise en œuvre par l'attache d'un délai T0 au message de réponse courante RREP2. L'étape E4 constate qu'un message de réponse RREP3 a été antérieurement reçu et que le délai T0 attaché à ce message de réponse antérieure RREP3 n'est pas échu. En conséquence, l'étape E5 est alors mise en œuvre. L'étape E51 constate également qu'un message de réponse RREP3 a été antérieurement reçu mais qu'il a été transmis par le routeur destinataire RN à un temps antérieur à celui de transmission du message de réponse RREP3. En l'occurrence, le numéro de séquence S2 inclus dans le message de réponse courante RREP2 est inférieur au numéro de séquence S3 inclus dans le message de réponse antérieure RREP3. Est alors mise en œuvre l'étape E53 de retenue, en tant que route entre ledit routeur initiateur R1 et ledit routeur destinataire RN, de la route identifiée par le message de réponse antérieure RREP3. Cette identification est par exemple donnée par le numéro de séquence S3 inclus dans le message de réponse courante RREP3.

Au temps t4, un quatrième message de réponse RREP4 est reçu (nouvelle étape E2) par le routeur initiateur R1. L'étape E3 est mise en œuvre par l'attache d'un délai T0 au message de réponse courante RREP4. L'étape E4 constate qu'un message de réponse RREP2 a été antérieurement reçu et que le délai T0 attaché à ce message de réponse antérieure RREP2 est échu. En conséquence, est alors mise en œuvre l'étape E6 de retenue, en tant que route entre ledit routeur initiateur R1 et ledit routeur destinataire RN, de la route identifiée par le message de réponse courante RREP4. Cette identification est par exemple donnée par le numéro de séquence S4 inclus dans le message de réponse courante RREP4.

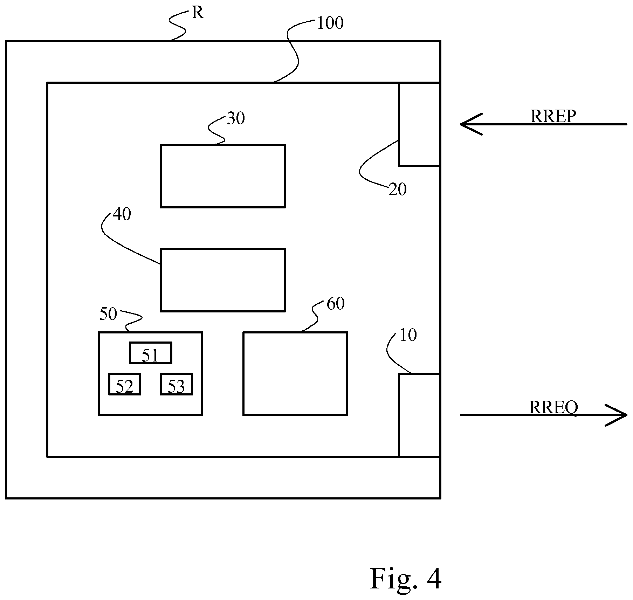

A la Fig. 4, on a représenté un routeur R d'un réseau de communication par courants porteurs en ligne. Ce routeur R comporte une unité 100 de détermination d'une route entre lui et un routeur destinataire, ladite unité 100 comportant:
- des moyens de diffusion 10 pour diffuser dans ledit réseau d'au moins un message de requête de route RREQ, et
- des moyens de réception 20 pour recevoir un message de réponse de route RREP identifiant une route entre ledit routeur R et ledit routeur destinataire.

Selon la présente invention, ledit routeur R comporte en outre :
- des moyens de temps 30 pour attacher un délai T0 à un message de réponse de route suite à la diffusion d'un message de requête pour une route vers ledit routeur destinataire reçue par lesdits moyens de réception 20, et
- des moyens de vérification 40 pour vérifier qu'à la réception d'un message de réponse par lesdits moyens de réception 20, le délai T0 attaché par lesdits moyens de temps 30 à un message de réponse de route RREP suite à un message de requête de route RREQ pour une route vers ledit routeur destinataire antérieurement reçue n'est pas expiré,
- des moyens de retenue 50 pour retenir en tant que route entre ledit routeur initiateur et ledit routeur destinataire, la route identifiée par le message de réponse de route le plus récemment transmis par ledit routeur destinataire si le délai attaché à ladite réponse précédemment reçue n'est pas expiré, et
- des moyens de retenue 60 pour retenir la route identifiée par le message de réponse courante RREPc même si un message de réponse de route suite à un message de requête pour une route vers ledit routeur destinataire a été précédemment reçue dès lors que le délai attaché à ladite réponse précédemment reçue est expiré.

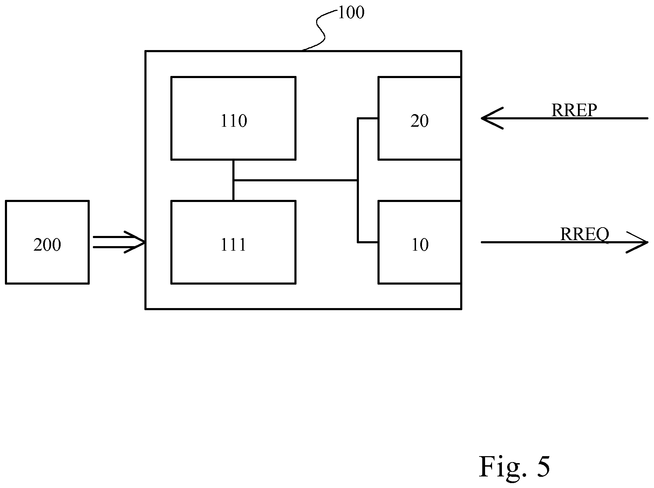

Comme cela est montré à la Fig. 5, une unité de détermination 100 d'une route d'un routeur R selon la présente invention comporte un processeur 110 relié à une mémoire 111 dans laquelle sont stockés, d'une part, des programmes et, d'autre part, des données utiles à l'exécution par le processeur 110 de ces programmes. Elle comporte également les moyens 10 de diffusion de messages de requête RREQ et des moyens 20 de réception de messages de réponses RREP. Parmi les programmes stockés dans la mémoire 111, un programme d'ordinateur chargé dans la mémoire 111 comprend des instructions pour mettre en œuvre, par le processeur 110 de l'unité de détermination 100, les étapes d'un procédé de détermination de route tel qu'il vient d'être décrit, dans un mode de réalisation particulier.

Ce programme d'ordinateur peut être chargé dans la mémoire 111 à partir de moyens de stockage externe 200, tels qu'une carte ou clef mémoire, un disque CD ou DVD, etc. Ces moyens de stockage 200 stockent ainsi ce programme d'ordinateur qui comprend des instructions pour mettre en œuvre, lorsqu'il est chargé dans une mémoire 111 d'une unité de détermination 100 d'un routeur R tel que celle qui est représentée à la Fig. 4 et qu'il est exécuté par un processeur 110 de ladite unité de détermination 100, un procédé de détermination tel qu'il vient d'être décrit.

## Revendications

1. Procédé de détermination, par un routeur, dit routeur initiateur, d'une route entre lui et un routeur destinataire d'un réseau de communication par courants porteurs en ligne, ledit procédé comportant les étapes suivantes :
- une étape E1 de diffusion dans ledit réseau par ledit routeur initiateur (R1) d'au moins un message de requête de route (RREQ), ledit routeur destinataire (R1) répondant audit ou à chaque message de requête de route (RREQ) par la transmission point à point au routeur initiateur (R1) d'au moins un message de réponse (RREP) identifiant une route entre ledit routeur initiateur (R1) et ledit routeur destinataire (RN), chaque message de réponse (RREP) comportant un numéro de séquence attribué séquentiellement par ledit routeur destinataire, et chaque route étant associée à une période de validité, et,
- une étape E2 de réception d'un message de réponse, dite message de réponse courante (RREPc),
**caractérisé en ce qu'**il comporte en outre
- une étape E3 d'attache d'un délai (T0) à un message de réponse (RREPc) suite à un message de requête (RREQ) pour une route vers ledit routeur destinataire (Rn) mise en œuvre à la réception dudit message de réponse (RREPc), la durée du délai T0 étant sensiblement de même grandeur que le temps maximum estimé mis par un message de requête RREQ pour transiter, dans ledit réseau de communication, d'un routeur à un autre routeur dudit réseau,
- une étape E4 de vérification qu'à la réception d'un message de réponse courante (RREPc), le délai (T0) attaché à un message de réponse (RREP-) suite à un message de requête (RREQ) pour une route vers ledit routeur destinataire antérieurement reçu n'est pas expiré,
- une étape E5 de retenue, en tant que route entre ledit routeur initiateur et ledit routeur destinataire, de la route identifiée par le message de réponse (RREPc ou RREP-) le plus récemment transmis par ledit routeur destinataire (RN) si le délai attaché à ladite réponse précédemment reçue n'est pas expiré, le message de réponse (RREPc ou RREP-) le plus récemment transmis étant identifié comme étant le message de réponse incluant le numéro de séquence le plus grand, et,
- une étape E6 de retenue de la route identifiée par le message de réponse courante (RREPc) même si un message de réponse à une requête pour une route vers ledit routeur destinataire a été précédemment reçu dès lors que le délai (T0) attaché à ladite réponse précédemment reçue est expiré.

2. Procédé de détermination selon la revendication 1, **caractérisé en ce que** l'étape E5 de retenue du message de réponse le plus récemment transmis comporte une étape E51 de vérification que le message de réponse courante (RREPc) a été transmis par le routeur destinataire RN postérieurement au message de réponse antérieurement reçue (RREP-), une étape E52 de retenue en tant que route entre ledit routeur initiateur R1 et ledit routeur destinataire RN, de la route identifiée par le message de réponse courante (RREPc), ladite étape E52 étant mise en œuvre si l'étape de vérification E51 a constaté que le message de réponse courante (RREP) a été transmis par le routeur destinataire RN postérieurement au message de réponse antérieurement reçu (RREP-) et une étape E53 de retenue de la route identifiée par le message de réponse antérieurement reçu (RREP-) qui est mise en œuvre dans le cas contraire.

3. Routeur d'un réseau de communication par courants porteurs en ligne, ledit routeur comportant une unité de détermination d'une route entre lui et un routeur destinataire, ladite unité comportant:
- des moyens de diffusion (10) pour diffuser dans ledit réseau d'au moins un message de requête de route (RREQ), et
- des moyens de réception (20) pour recevoir un message de réponse (RREP) identifiant une route entre ledit routeur et ledit routeur destinataire, chaque message de réponse (RREP) comportant un numéro de séquence attribué séquentiellement par ledit routeur destinataire, et chaque route étant associée à une période de validité,
**caractérisé en ce qu'**il comporte en outre
- des moyens de temps (30) pour attacher un délai (T0) à un message de réponse suite à un message de requête (RREQ) pour une route vers ledit routeur destinataire reçu par lesdits moyens de réception (20), la durée du délai T0 étant sensiblement de même grandeur que le temps maximum estimé mis par un message de requête RREQ pour transiter, dans ledit réseau de communication, d'un routeur à un autre routeur dudit réseau, et
- des moyens de vérification (40) pour vérifier qu'à la réception d'un message de réponse (RREPc) par lesdits moyens de réception (20), le délai (T0) attaché par lesdits moyens de temps (30) à un message de réponse suite à une requête pour une route vers ledit routeur destinataire antérieurement reçue n'est pas expiré,
- des moyens de retenue (50) pour retenir en tant que route entre ledit routeur initiateur et ledit routeur destinataire, la route identifiée par le message de réponse le plus récemment transmis par ledit routeur destinataire si le délai (T0) attaché audit message de réponse précédemment reçu n'est pas expiré, le message de réponse (RREPc ou RREP-) le plus récemment transmis étant identifié comme étant le message de réponse incluant le numéro de séquence le plus grand, et,
- des moyens de retenue (60) pour retenir la route identifiée par le message de réponse courante (RREPc) même si un message de réponse suite à un message de requête pour une route vers ledit routeur destinataire a été précédemment reçue dès lors que le délai attaché à ladite réponse précédemment reçue est expiré.

4. Routeur selon la revendication 3, 4 , **caractérisé en ce que** lesdits moyens de retenue (50) comportent des moyens de vérification (51) pour vérifier que le message de réponse courante (RREPc) a été transmis par le routeur destinataire (RN) postérieurement au message de réponse antérieurement reçu (RREP), lesdits moyens de retenue (50) incluant des moyens de retenue (51) pour retenir en tant que route entre ledit routeur initiateur R1 et ledit routeur destinataire RN, la route identifiée par le message de réponse courante (RREPc) si lesdits moyens de vérification (51) ont constaté que le message de réponse courante (RREPc) a été transmis par le routeur destinataire RN postérieurement au message de réponse antérieurement reçu (RREP-), et des moyens de retenue (52) pour retenir la route identifiée par le message de réponse antérieurement reçu (RREP-) dans le cas contraire.

5. Programme d'ordinateur chargé dans une mémoire (111) d'une unité de traitement (11) d'un équipement (10) comprenant des instructions pour mettre en œuvre, par un processeur (110) de ladite unité de traitement (11), un procédé de test selon une des revendications 1 à 2.

6. Moyens de stockage, **caractérisés en ce qu'**ils stockent un programme d'ordinateur comprenant des instructions pour mettre en œuvre, lorsqu'il est chargé dans une mémoire (111) d'une unité de traitement (10) d'un équipement (10) et qu'il est exécuté par un processeur (110) de ladite unité de traitement (10), un procédé selon l'une quelconque des revendications 1 à 2.

## Patentansprüche

1. Verfahren zum Bestimmen durch einen Router, der Quell-Router genannt wird, einer Route zwischen ihm und einem Ziel-Router eines Kommunikationsnetzes durch Leitungsträgerströme, wobei das Verfahren die folgenden Schritte umfasst:
- einen Schritt E1 des Sendens in dem Netz durch den Quell-Router (R1) wenigstens einer Routen-Anforderungsnachricht (RREQ), wobei der Ziel-Router (R1) auf die oder jede Routenanforderungsnachricht (RREQ) durch punktweises Übertragen an den Quell-Router (R1) wenigstens einer Antwortnachricht (RREP), die eine Route zwischen dem Quell-Router (R1) und dem Ziel-Router (RN) identifiziert, antwortet, wobei jede Antwortnachricht (RREP) eine Folgennummer enthält, die durch den Ziel-Router nacheinander zugeschrieben wird, und wobei jeder Route eine Gültigkeitsdauer zugeordnet ist, und
- einen Schritt E2 des Empfangens einer Antwortnachricht, die aktuelle Antwortnachricht (RREPc) genannt wird,
**gekennzeichnet durch**
- einen Schritt E3 des Anfügens einer Verzögerung (T0) an eine Antwortnachricht (RREPc) infolge einer Anforderungsnachricht (RREQ) für eine Route zu dem Ziel-Router (Rn), der bei Empfang der Antwortnachricht (RREPc) ausgeführt wird, wobei die Verzögerungsdauer (T0) im Wesentlichen die gleiche Größe hat wie die geschätzte maximale Zeit, die eine Anforderungsnachricht RREQ benötigt, um sich in dem Kommunikationsnetz von einem Router zu einem weiteren Router des Netzes zu bewegen,
- einen Schritt E4 des Verifizierens, dass beim Empfang einer aktuellen Antwortnachricht (RREPc) die an eine Antwortnachricht (RREP-) angefügte Verzögerung (T0) nach einer Anforderungsnachricht (RREQ) für eine Route zu dem Ziel-Router, die vorher empfangen worden ist, nicht verstrichen ist,
- einen Schritt E5 des Aufrechterhaltens als Route zwischen dem Quell-Router und dem Ziel-Router jener Route, die durch die Antwortnachricht (RREPc oder RREP-), die zuletzt von dem Ziel-Router (RN) übertragen worden ist, identifiziert wird, falls die an die vorher empfangene Antwort angefügte Verzögerung nicht verstrichen ist, wobei die Antwortnachricht (RREPc oder RREP-), die zuletzt übertragen worden ist, als die Antwortnachricht identifiziert wird, die die größte Folgennummer enthält, und
- einen Schritt E6 des Aufrechterhaltens der durch die aktuelle Antwortnachricht (RREPc) identifizierten Route selbst dann, wenn die Antwortnachricht auf eine Anforderung für eine Route zu dem Ziel-Router vorher empfangen worden ist, sobald die an die vorher empfangene Antwort angefügte Verzögerung (T0) verstrichen ist.

2. Bestimmungsverfahren nach Anspruch 1, **dadurch gekennzeichnet, dass** der Schritt E5 des Aufrechterhaltens der Antwortnachricht, die zuletzt übertragen wurde, einen Schritt E51 des Verifizierens, dass die aktuelle Antwortnachricht (RREPc) von dem Ziel-Router RN nach einer vorher empfangenen Antwortnachricht (RREP-) übertragen worden ist, einen Schritt E52 des Aufrechterhaltens als Route zwischen dem Quell-Router R1 und dem Ziel-Router RN jener Route, die durch die aktuelle Antwortnachricht RREPc identifiziert worden ist, wobei der Schritt E52 ausgeführt wird, wenn im Verifizierungsschritt E51 festgestellt wird, dass die aktuelle Antwortnachricht (RREP) von dem Ziel-Router RN nach einer vorher empfangenen Antwortnachricht (RREP-) übertragen worden ist, und einen Schritt E53 des Aufrechterhaltens jener Route, die durch die vorher empfangene Antwortnachricht (RREP-), die im entgegengesetzten Fall benutzt wird, identifiziert worden ist, umfasst.

3. Router für ein Kommunikationsnetz mittels Leitungsträgerströmen, wobei der Router eine Einheit zum Bestimmen einer Route zwischen ihm und einem Ziel-Router enthält, wobei die Einheit Folgendes umfasst:
- Sendemittel (10) zum Senden wenigstens einer Routenanforderungsnachricht (RREQ) in das Netz, und
- Empfangsmittel (20) zum Empfangen einer Antwortnachricht (RREP), die eine Route zwischen dem Router und dem Ziel-Router identifiziert, wobei jede Antwortnachricht (RREP) eine Folgennummer enthält, die von dem Ziel-Router nacheinander zugeschrieben wird, wobei jeder Route eine Gültigkeitsdauer zugeordnet wird,
**gekennzeichnet durch**
- Zeitmittel (30) zum Anfügen einer Verzögerung (T0) an eine Antwortnachricht infolge einer Anforderungsnachricht (RREQ) für eine Route zu dem Ziel-Router, die von den Empfangsmitteln (20) empfangen wird, wobei die Verzögerungsdauer T0 im Wesentlichen die gleiche Größe hat wie die geschätzte maximale Zeit, die eine Anforderungsnachricht RREQ benötigt, um sich in dem Kommunikationsnetz zwischen einem Router und einem weiteren Router des Netzes zu bewegen, und
- Verifikationsmittel (40) zum Verifizieren, dass beim Empfang einer Antwortnachricht (RREPc) durch die Empfangsmittel (20) die Verzögerung (T0), die von den Zeitmitteln (30) an eine Antwortnachricht infolge einer vorher empfangenen Anforderung für eine Route zu dem Ziel-Router angefügt wird, nicht verstrichen ist,
- Aufrechterhaltungsmittel (50) zum Aufrechterhalten als Route zwischen dem Quell-Router und dem Ziel-Router jener Route, die durch die Antwortnachricht, die zuletzt von dem Ziel-Router übertragen worden ist, identifiziert wird, falls die an die vorher empfangene Antwortnachricht angefügte Verzögerung (T0) nicht verstrichen ist, wobei die zuletzt empfangene Antwortnachricht (RREPc oder RREP-) als die Antwortnachricht identifiziert wird, die die größte Folgennummer enthält, und
- Aufrechterhaltungsmittel (60) zum Aufrechterhalten jener Route, die durch die aktuelle Antwortnachricht (RREPc) identifiziert wird, selbst wenn eine Antwortnachricht infolge einer Anforderungsnachricht für eine Route zu dem Ziel-Router vorher empfangen worden ist, sobald die an die vorher empfangene Antwort angefügte Verzögerung verstrichen ist.

4. Router nach Anspruch 3, **dadurch gekennzeichnet, dass** die Haltemittel (50) Verifikationsmittel (51) umfassen, um zu verifizieren, dass die aktuelle Antwortnachricht (RREPc) von dem Ziel-Router (RN) nach einer vorher empfangenen Antwortnachricht (RREP) übertragen worden ist, wobei die Aufrechterhaltungsmittel (50) Aufrechterhaltungsmittel (51) zum Aufrechterhalten als Route zwischen dem Quell-Router R1 und dem Ziel-Router RN jener durch die aktuelle Antwortnachricht (RREPc) identifizierten Route, falls die Verifikationsmittel (51) festgestellt haben, dass die aktuelle Antwortnachricht (RREPc) von dem Ziel-Router RN nach der vorher empfangenen Antwortnachricht (RREP-) übertragen worden ist, und Aufrechterhaltungsmittel (52), um die Route, die im entgegengesetzten Fall durch die vorher empfangene Antwortnachricht (RREP-) identifiziert worden ist, aufrechtzuerhalten, umfassen.

5. Computerprogramm, das in einen Speicher (111) einer Verarbeitungseinheit (11) einer Anlage (10) geladen ist, das Befehle enthält, um durch einen Prozessor (110) der Verarbeitungseinheit (11) ein Prüfverfahren nach einem der Ansprüche 1 bis 2 auszuführen.

6. Speichermittel, **dadurch gekennzeichnet, dass** sie ein Computerprogramm speichern, das Befehle enthält, um dann, wenn es in einen Speicher (111) einer Verarbeitungseinheit (10) einer Anlage (10) geladen ist und wenn es durch einen Prozessor (110) der Verarbeitungseinheit (10) ausgeführt wird, ein Verfahren nach einem der Ansprüche 1 bis 2 auszuführen.

## Claims

1. Method for determining, by means of a router, called initiating router, a route between same and a destination router of a communication network by powerline communication, said method comprising the following steps:
- a step E1 of said initiating router (R1) broadcasting in said network at least one route request message (RREQ), said destination router (R1) responding to said or to each route request message (RREQ) by point-to-point transmission to the initiating router (R1) of at least one response message (RREP) identifying a route between said initiating router (R1) and said destination router (RN), each response message (RREP) comprising a sequence number assigned sequentially by said destination router, and each route being associated with a period of validity, and,
- a step E2 of receiving a response message, called current response message (RREPc),
**characterized in that** it further comprises
- a step E3 of attaching a time limit (T0) to a response message (RREPc) following a request message (RREQ) for a route to said destination router (Rn) implemented on receipt of said response message (RREPc), the duration of the time limit T0 being substantially of the same magnitude as the estimated maximum time taken by a request message RREQ to pass, through said communication network, from one router to another router of said network,
- a step E4 of verifying that upon receipt of a current response message (RREPc), the time limit (T0) attached to a response message (RREP-) following a request message (RREQ) for a route to said destination router received previously has not expired,
- a step E5 of retaining, as a route between said initiating router and said destination router, the route identified by the response message (RREPc or RREP-) most recently transmitted by said destination router (RN) if the time limit attached to said response received previously has not expired, the most recently transmitted response message (RREPc or RREP-) being identified as being the response message including the largest sequence number, and,
- a step E6 of retaining the route identified by the current response message (RREPc) even though a response message to a request for a route to said destination router was received previously after the time limit (T0) attached to said previously received response had expired.

2. Determining method according to Claim 1, **characterized in that** step E5 of retaining the most recently transmitted response message comprises a step E51 of verifying that the current response message (RREPc) was transmitted by the destination router RN after the response message (RREP-) received previously, a step E52 of retaining, as a route between said initiating router R1 and said destination router RN, the route identified by the current response message (RREPc), said step E52 being implemented if the verifying step E51 has found that the current response message (RREP) was transmitted by the destination router RN after the response message received previously (RREP-) and a step E53 of retaining the route identified by the response message received previously (RREP-) which is implemented otherwise.

3. Router of a powerline communication network, said router comprising a unit for determining a route between same and a destination router, said unit comprising:
- broadcasting means (10) for broadcasting in said network at least one route request message (RREQ), and
- receiving means (20) for receiving a response message (RREP) identifying a route between said router and said destination router, each response message (RREP) comprising a sequence number assigned sequentially by said destination router, and each route being associated with a period of validity,
**characterized in that** it further comprises
- time means (30) for attaching a time limit (T0) to a response message following a request message (RREQ) for a route to said destination router received by said receiving means (20), the duration of the time limit T0 being substantially of the same magnitude as the estimated maximum time taken by a request message RREQ to pass, through said communication network, from one router to another router of said network, and
- verifying means (40) for verifying that upon receipt of a response message (RREPc) by said receiving means (20), the time limit (T0) attached by said time means (30) to a response message following a request for a route to said destination router received previously has not expired,
- retaining means (50) for retaining, as a route between said initiating router and said destination router, the route identified by the response message most recently transmitted by said destination router if the time limit (T0) attached to said response message received previously has not expired, the most recently transmitted response message (RREPc or RREP-) being identified as the response message including the largest sequence number, and,
- retaining means (60) for retaining the route identified by the current response message (RREPc) even though a response message following a request message for a route to said destination router was received previously after the time limit attached to said previously received response had expired.

4. Router according to Claim 3, **characterized in that** said retaining means (50) comprise verifying means (51) for verifying that the current response message (RREPc) was transmitted by the destination router (RN) after the response message received previously (RREP), said retaining means (50) including retaining means (51) for retaining, as a route between said initiating router R1 and said destination router RN, the route identified by the current response message (RREPc) if said verifying means (51) have found that the current response message (RREPc) was transmitted by the destination router RN after the response message received previously (RREP-), and retaining means (52) for retaining the route identified by the response message received previously (RREP-) otherwise.

5. Computer program loaded into a memory (111) of a processing unit (11) of an equipment (10) comprising instructions for implementing, by means of a processor (110) of said processing unit (11), a test method according to either of Claims 1 and 2.

6. Storage means, **characterized in that** they store a computer program comprising instructions for implementing, when it is loaded into a memory (111) of a processing unit (10) of an equipment (10) and it is executed by a processor (110) of said processing unit (10), a method according to either of Claims 1 and 2.
